# EUROPÄISCHE PATENTSCHRIFT

(11) **EP 2 545 311 B1**
(45) Veröffentlichungstag und Bekanntmachung des Hinweises auf die Patenterteilung: **11.05.2022**
(21) Anmeldenummer: 11710683.1
(22) Anmeldetag: 10.03.2011
(51) Int. Cl.: F16K 11/20, F16K 27/00, F16K 27/10

(54) **VERTEILER FÜR GEBÄUDE- ODER RAUMTEMPERIERUNGSSYSTEME MIT EINEM VERTEILERROHR**
DISTRIBUTOR FOR BUILDING OR ROOM TEMPERATURE-CONTROL SYSTEMS, WHEREIN THE DISTRIBUTOR COMPRISES A DISTRIBUTOR PIPE
RÉPARTITEUR DESTINÉ À DES SYSTÈMES DE RÉGULATION THERMIQUE DE BATIMENTS OU DE LOCAUX, LEDIT RÉPARTITEUR ÉTANT MUNI D'UNE TUBULURE DE RÉPARTITION

(30) Priorität: 10.03.2010 DE 102010011701
(43) Veröffentlichungstag der Anmeldung: 16.01.2013
(73) Patentinhaber: STRAUB KG, 73337 Bad Überkingen (DE)
(72) Erfinder: STRAUB, Hans, 73337 Bad Überkingen (DE)
(74) Vertreter: Fürst, Siegfried
(86) Internationale Anmeldenummer: PCT/EP2011/001189
(87) Internationale Veröffentlichungsnummer: WO 2011/110351

(56) Entgegenhaltungen:
- EP-A1- 0 648 965
- EP-A1- 1 482 249
- EP-A2- 1 691 113
- DE-A1- 2 109 326
- DE-A1- 2 434 482
- DE-A1- 10 049 129
- DE-U- 1 955 257
- DE-U- 7 344 345
- None

## Beschreibung

Die Erfindung betrifft einen Verteiler nach dem Oberbegriff des Anspruchs 1, welcher in Gebäude- oder Raumtemperierungssystemen verwendet wird, z.B. an einer Verteiler- und/oder Regelvorrichtung, oder deren Durchfluss- oder Temperatur-Stellventile, oder dergleichen Funktionseinheiten.

Fluid führende Armaturen, insbesondere in Form von Verteilerventilen, Heizkörperanschlussarmaturen, Druckspüler, Absperrelemente und der gleichen Funktionseinheiten sind im Stand der Technik bekannt. Armaturen der eingangs genannten Art dienen zum Absperren und/oder Regeln des durch ihr Gehäuse strömenden Fluides oder Gases.

Die Gehäuse und viele Funktionsteile dieser Armaturen sind in der Regel durch Warmumformung in Form von Pressen, Schmieden oder dergleichen bzw. Gießen hergestellt. Als Werkstoffe finden überwiegend Messing oder Rotguss Anwendung. Die so hergestellten Armaturen und Armaturteile erfüllen zwar alle Anforderungen an die Qualität, die Herstellung mit Hilfe der oben beschriebenen Herstellungsverfahren ist jedoch mit erheblichen Kosten verbunden.

Die hohen Kosten ergeben sich beispielsweise durch den sehr hohen Energieaufwand beim Glühen der Schmiedebutzen sowie bei der Erzeugung und Bereitstellung der Metallschmelze. Weiterhin ist die Anzahl der erforderlichen Arbeitsschritte bei der Warmumformung hoch. So müssen die Butzen gesägt, geglüht, gepresst bzw. geschmiedet, entgratet und gebeizt werden. Hinzu kommt, dass aus der mehrstufigen mechanischen Bearbeitung und aufwendigen Entfernung der dazu erforderlichen Schneidschmierstoffe lange Prozesszeiten resultieren. Weiterhin ist aufgrund der beim Guss auftretenden Lunkerbildung die Ausschussquote der Gussteile relativ hoch. Zudem müssen die Gussteile im Anschluss ihrer Herstellung auf ihre Dichtigkeit geprüft werden. Zur Vermeidung von Korrosion ist darüber hinaus die Verwendung von in der Regel recht teuren Sonderlegierungen erforderlich. Außerdem ist aufgrund der Mindestwandstärken bei Gussgehäusen sowie der mangelnden Hohlraumausbilung bei Schmiedestücken ein erhöhter Materieleinsatz erforderlich.

Im Stand der Technik ist zudem bekannt, dass Gehäuse von Verteilerventilen ausgehend von einem Rohrstück durch Hochdruckumformverfahren herstellbar sind, z.B. aus der DE 199 54 456 A1.

Bekannt, z.B. aus der DE 200 09 721 U1, ist auch das Herstellen von besagten Gehäusen durch Tiefziehumformung, wobei ausgehend von Blechplatinen zwei Gehäuseteile hergestellt werden, die dann, nach Positionierung von deren Funktionselementen, miteinander durch Schweißen, durch Verschrauben oder durch Löten verbunden werden.

Weiterhin ist aus der EP 0 648 965 A1 eine Baugruppe für ein Membran-Sicherheitsventil, in Form einer Austauschpatrone, bekannt, welche zum Einsetzen in ein Sicherheitsventil Gehäuse ausgebildet ist. Diese Baugruppe enthält auch ein aus einem Gehäuseoberteil und einem Gehäuseunterteil gebildeten Gehäuse, welche dünnwandige Teile sind. Das Gehäuseunterteil weist seitliche Durchbrüche zum Austritt des Druckmittels beim Ansprechen des Sicherheitsventils auf. Mit dieser Baugruppe ist die Beeinflussung der Durchflussmenge eines temperaturübertragenden Mediums in einem Gebäude- oder Raumtemperatur Regierungssystem nicht möglich.

Die DE 19 55 257 U zeigt ein Ventilgehäuse für ein Druckbegrenzungsventil, welches auch aus zwei hülsenförmigen, dünnwandigen Hälften zusammengesetzt ist. Dieses Ventilgehäuse ist für ein Ventil für die Beeinflussung der Durchflussmenge eines temperaturübertragenden Mediums in einem Gebäude- oder Raumtemperatur Regierungssystem nicht verwendbar.

Die DE 2 109 326 A1 offenbart mehrere Ausführungsvarianten für einen Ventilsitzring, welcher vorzugsweise für thermoplastische Ventile ist. Ein Randbereich des hülsenförmigen Ventilsitzes ist speziell derart ausgebildet, dass unterhalb dieses Ventilsitzringes angeordnete weitere Ventilelemente mit diesem Randbereich verbunden werden können. Hinweise für die Ausbildung bzw. Gestaltung eines mehrteiligen Gehäuses für ein Funktionselement eines Ventiles, insbesondere eines Hubventils welches für Gebäude- oder Raumtemperierungssysteme verwendbar ist, offenbart diese Schrift nicht.

Die EP169113 A2 und die DE10049129 A1 offenbaren bekannte Verteiler.

Ausgehend von diesem Stand der Technik besteht die Aufgabe der Erfindung darin, Mittel und Wege zu finden mittels denen ohne Abstriche an Qualitätsparametern ein Verteiler für Gebäude- oder Raumtemperierungssysteme, insbesondere an und/oder teils in dessen Verteilerrohr angeordnete Funktionseinheiten besagter Art und deren Funktionselemente, insbesondere Hubventile, mit welchen die Durchflussmenge eines hindurch geleiteten, temperaturübertragenden Mediums und dessen Teilströme beeinflusst werden kann, kostengünstiger und umweltschonender herstellbar ist bzw. sind.

Die Aufgabe wird erfindungsgemäß durch einen Verteiler für Gebäude- oder Raumtemperierungssysteme mit den Merkmalen des Patentanspruchs 1 gelöst. Die weiteren Patentansprüche 2 bis 5 zeigen Weiterbildungen und Ausführungsvarianten der Erfindung.

Dieser neue Verteiler für Gebäude- oder Raumtemperierungssysteme gemäß der Erfindung besitzt ein Verteilerrohr, das mindestens eine Zuflussöffnung, über die ein Fluid in das Verteilerrohr fließen kann, mindestens eine Anschlussöffnung und mindestens eine Abzweigöffnung aufweist. In der Anschlussöffnung ist ein erstes Funktionselement eingeschraubt und in der Abzweigöffnung ist ein zweites Funktionselement eingeschraubt

Das erste Funktionselement ist ein Ventileinsatz und weist wenigstens einen Körper als Gehäuse auf, in dem wenigstens ein Funktionsteil bewegbar gehalten ist.

Das zweite Funktionselement ist ein Anschlussstück und weist wenigstens einen Körper als Gehäuse auf, an dem wenigstens eine Funktionsfläche vorgesehen ist.

Im Speziellen ist an diesem Verteiler gemäß der Erfindung vorgesehen, dass das Gehäuse der Funktionselemente jeweils aus wenigstens zwei dünnwandigen Teilen aus kaltumformbarem Material zusammengesetzt ist, wobei die Füge- und Trennebene, in deren Bereich die wenigstens zwei kaltumgeformten Teile des Gehäuses miteinander verbunden werden, im Wesentlichen quer zur Funktionsachse des bewegbaren Funktionsteiles des ersten Funktionselementes bzw. der Funktionsfläche des zweiten

Funktionselementes liegt. Zudem ist die Funktionsfläche des zweiten Funktionselementes ein Ventilsitz und das erste Funktionselement und das zweite Funktionselement bilden zusammen ein Hubventil.

Ein wesentlicher Kernpunkt der Erfindung ist, dass bei dem Funktionselement, welches einen Körper als Gehäuse aufweist, in dem wenigstens ein Funktionsteil bewegbar gehalten ist bzw. an dem wenigstens eine Funktionsfläche vorgesehen ist, der (Grund-) Körper aus zwei oder mehreren dünnwandigen kaltumformbaren Teilen, vorzugsweise aus Edelstahl, zusammengesetzt ist.

In vorteilhafter Ausführung sind die dünnwandigen Teile aus Edelstahl im Wesentlichen mittels Tiefziehumformung hergestellt.

Ein weiteres Z erfindungsgemäßes Konstruktionsdetail ist, dass die Füge- und Trennebene, in deren Bereich die wenigstens zwei Teile des (Grund-) Körpers, des Gehäuses, miteinander verbunden werden, im Wesentlichen quer zur Funktionsachse des bewegbaren Funktionsteiles bzw. der Funktionsfläche des Funktionselementes liegt.

Das wenigstens eine bewegbare Funktionsteil ist bei einem Hubventil die Ventilstange, an der das Verschlusselement, in der Regel der Ventilteller, gehalten ist. Die wenigstens eine Funktionsfläche ist der Ventilsitz des Hubventiles.

Und nach einer dritten, jedoch nicht abschließenden Ausführung ist das Funktionselement ein Ventileinsatz mit integrierter Durchflussmessanzeige, dessen Grundkörper (Gehäuse) aus mehreren dünnwandigen, tiefgezogenen Teilen aus Edelstahl zusammengesetzt ist.

Die Vorteile des Verteilers nach der Erfindung sind die unkomplizierte Herstellung der Funktionselemente mit sehr geringem oder keinem Aufwand an spanabhebender Bearbeitung. Die meisten Abschnitte können praktisch ohne spanabhebende Nachbearbeitung aus einem Blechstreifen umgeformt werden. Die Materialersparnis ist dabei erheblich, sodass es möglich ist, das Gewicht eines Hubventils bis zur Hälfte des bisherigen Gewichtes zu senken, wobei die Materialersparnis sogar noch größer sein kann.

Die besagten Funktionselemente für Heizkreis-Verteilereinrichtungen lassen sich nicht nur kostengünstig herstellen, sie halten auch höchsten Druckbeanspruchungen stand. Zudem werden im Stand der Technik bekannte Dichtungsprobleme bzw. Ermüdungserscheinungen an Dichtelementen gemindert bzw. eliminiert.

Wie eingangs erwähnt, kann der Verteiler in Systemen mit einem wärmeübertragenden Strömungsmittel (z.B. Dampf, Heißwasser, Kühlwasser, heiße Luft oder Abgas sowie andere fluide oder gasförmige Strömungsmittel), verwendet werden, z.B. an einer Verteilervorrichtung oder für Durchfluss- oder Temperatur-Stellventile, z. B. an Heizkörpern, und an dergleichen Funktionseinheiten.

Die Erfindung wird folgend anhand von schematisch in Zeichnungen gezeigten Ausführungsbeispielen näher und in weiteren Details erläutert. Dabei zeigen:
- Figuren 1a u. 1b: zwei Arten von erfindungsgemäßen Verteilern einer Verteilervorrichtung die mit den Funktionselementen ausgestattet sind;
- Figur 2: einen Ventileinsatz, ein erstes Funktionselement nach dem Stand der Technik;
- Figur 3: ein erstes Funktionselement gemäß der Erfindung, einen Ventileinsatz für ein Hubventil an einem erfindungsgemäßen Verteiler einer Verteilervorrichtung;
- Figur 3a: Details an einem Ventileinsatz nach Figur 3;
- Figuren 4, 4a, 5, 5a, 6, 6a: verschiedene erfindungsgemäße Ausführungen des Grundkörpers eines dritten Funktionselementes, eines Ventileinsatzes mit Durchflussmessanzeige;

- Figuren 7, 7a, 7b 9, 9a, 9b, und 10, 10a und 10b: verschiedene Ausführungen eines zweiten Funktionselementes, eines Anschlussstückes zur Verwendung an einem Verteiler einer erfindungsgemäßen Verteilervorrichtung
- Figuren 8, 8a, 8b: ein Anschlussstück zweiter Art, das nicht durch die Ansprüche gedeckt ist; sowie die
- Figuren 11 bis 11e: einen Ventileinsatz nach der Erfindung in einer weiteren Ausführung in mehreren Ansichten.

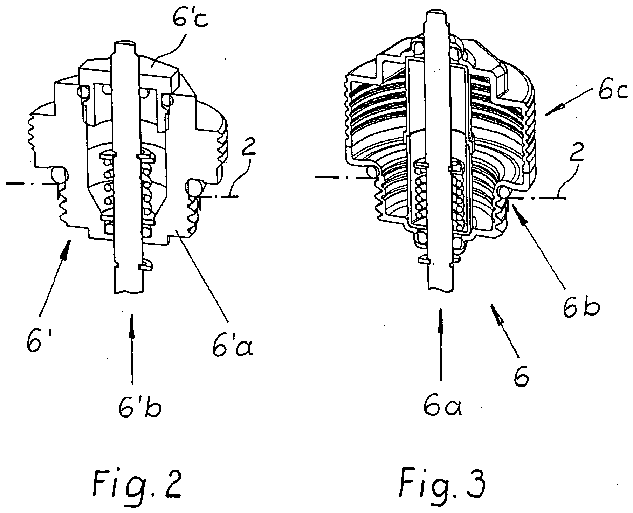

Ein Funktionselement nach dem Stand der Technik ist beispielhaft in der Figur 2 in einer teils geschnittenen Perspektivansicht gezeigt. Es ist hier ein Ventileinsatz 6' für einen Verteiler einer Verteilervorrichtung. Dieser Ventileinsatz 6' besteht aus einem Ventilkörper 6'a, in dem die bewegbaren Funktionsteile 6'b angeordnet sind. Der hohlzylindrische Ventilkörper 6'a wird mit einem Deckel 6'c geschlossen, der einen Durchbruch für das Hindurchführen der Ventilstange besitzt. Der gesamte Ventileinsatz 6' besteht im Wesentlichen aus Messing und weist die eingangs der Beschreibung genannten Nachteile auf.

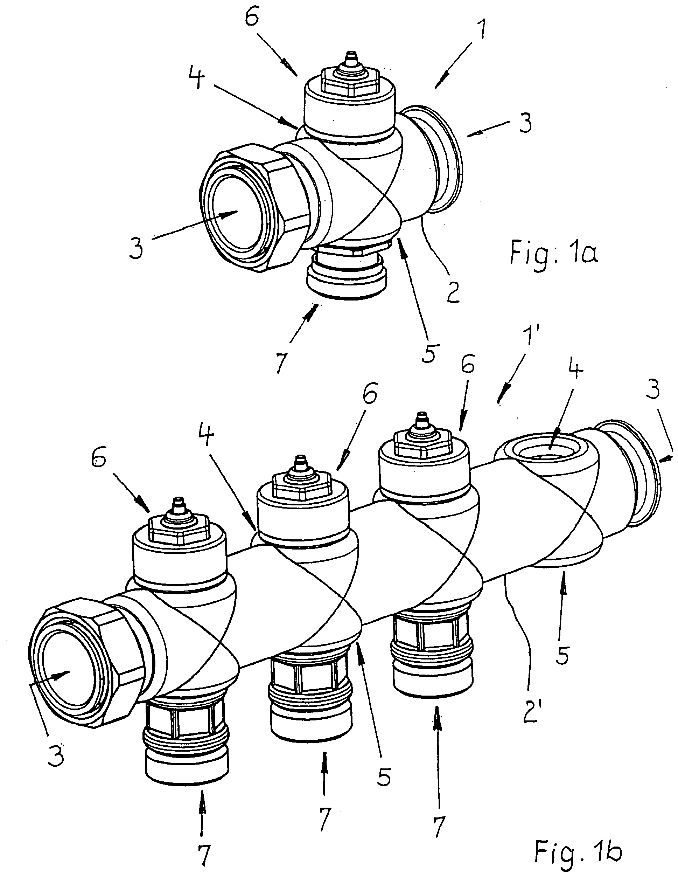

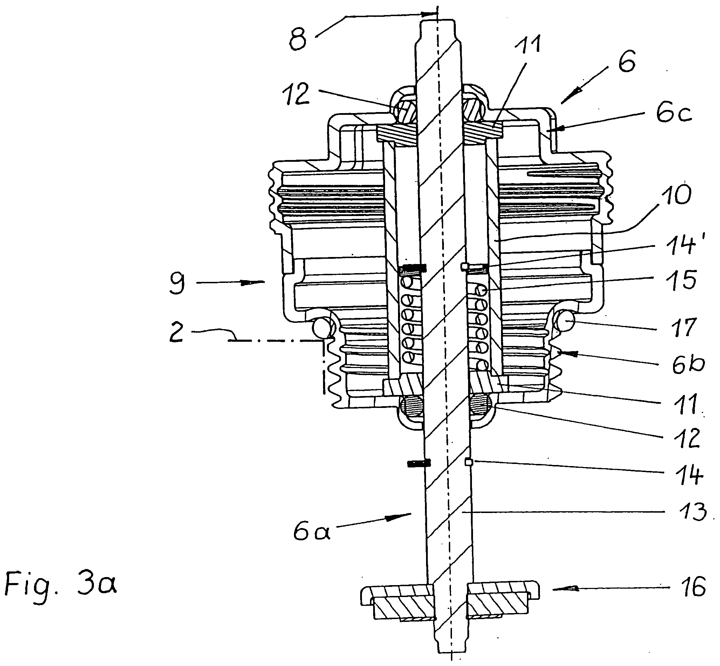

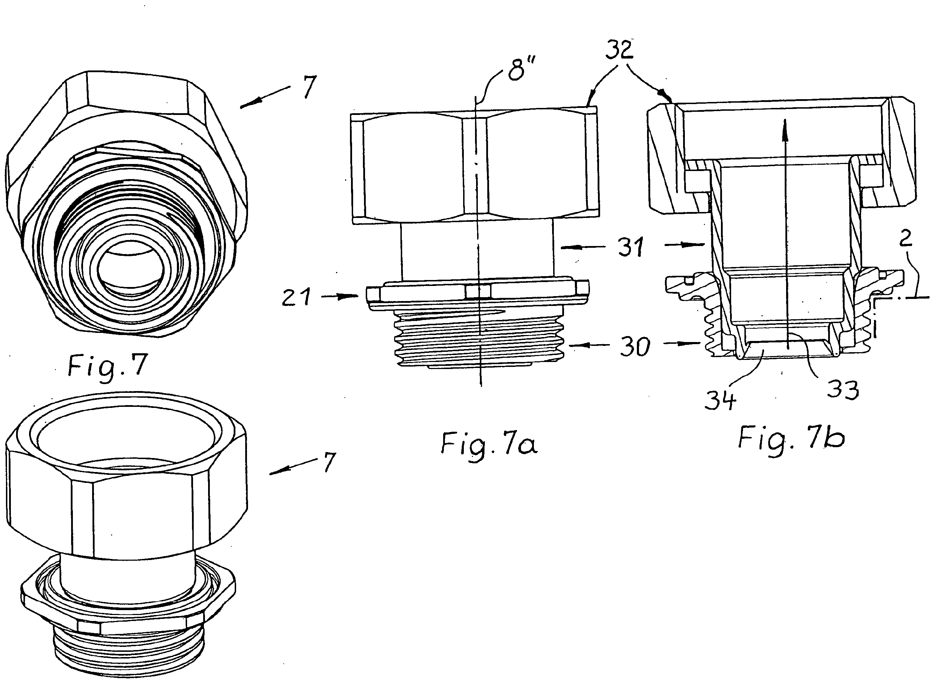

In der Figur 3 ist ein gattungsgemäßer Ventileinsatz in einer Leichtbauweise gemäß der Erfindung gezeigt, als erstes Funktionselement des Verteilers gemäß der Erfindung. Dieser neue Ventileinsatz 6, der die bewegbaren Funktionsteile 6a enthält, als auch die zweite Ausführung eines erfindungsgemäßen Funktionselementes, ein Anschlussstück 7, siehe Figur 7 und 9 bis 10b, sind jeweils in den Figuren 1a und 1b in Verwendung gezeigt. Ein Ventileinsatz 6 und ein Anschlussstück 7 bilden zusammen ein Hubventil.

In beiden Figuren ist ein Verteiler 1, 1' einer Verteilervorrichtung in Perspektive dargestellt. In der Figur 1a hat der Verteiler 1 eine Abzweigöffnung 5 und in Ausführung nach Figur 1b mehrere Abzweigöffnungen 5. In diesen Abzweigöffnungen 5 ist jeweils ein Anschlussstück 7, 7"oder 7‴ eingesetzt. Sofern eine Abzweigung nicht benötigt wird, wird die betreffende Abzweigöffnung 5 mit einem hier nicht gezeigten Endstück verschlossen. Gleiches gilt für die Anschlussöffnung 4, die nicht benutzt wird. In der in dem

Verteilerrohr 2, 2' des Verteilers 1, 1' vorgesehenen Anschlussöffnung/- en 4 wird jeweils ein Ventileinsatz 6 eingeschraubt.

Je nachdem, von welcher Seite aus die Zuleitung eines temperaturübertragenden Mediums erfolgt, wird eine der einander gegenüberliegend in den Endabschnitten eines Verteilerrohres 2, 2' vorgesehene Zuflussöffnung 3 ebenfalls mit einem schon genannten Endstück verschlossen.

Über die Zuflussöffnung 3 fließt das temperaturübertragende Medium in das Verteilerrohr 2; 2'. Mittels dem Ventileinsatz 6 und den im Ventileinsatz angeordneten bewegbaren Funktionsteilen wird die Durchflussmenge für den Abgang (Abzweigöffnung 5) eingestellt.

An jedem Anschlussstück 7, 7" oder 7‴ wird in bekannter Weise eine weiterführende Rohrleitung angeordnet, vorzugsweise angeschraubt. Sofern über eine Abzweigung 5 aus dem Verteilerrohr 2, 2' kein Medium weitergeführt werden soll, arbeiten der betreffende Ventileinsatz und das jeweilige Anschlussstück zusammen und bilden ein Absperrventil; weitere Details hierzu werden weiter hinten genannt.

Gemäß der Erfindung ist jeder neue Ventileinsatz 6 gemäß den Figuren 3 und 3a gegenüber bekannten Ventileinsätzen mehrteilig und in Leichtbauweise ausgeführt. Das heißt, dass der Ventilkörper des Ventileinsatzes, sein Gehäuse, aus wenigstens zwei,

Hohlkörperhälften 6b und 6c besteht. Die untere, erste Hohlkörperhälfte 6b (Gehäusehälfte)und die obere, zweite Hohlkörperhälfte 6c (Gehäusehälfte) werden aus dünnwandigem Edelstahlblech (Blechplatine, Blechabschnitt) vorzugsweise im Tiefziehverfahren geformt. Beide Teile werden im Bereich der Füge- und Trennebene 9 zu dem in der Figur 3a dargestellten Hohlkörper, dem Ventilkörper 6, zusammenfügt. Die Verbindung erfolgt durch Schweißen oder durch Klebung, wie in Figur 3a gezeigt. Die Verbindung der beiden Ventilkörperhälften 6b, 6c, kann aber gemäß weiteren Ausführungsvarianten durch Schraubung oder Bördelung oder Löten oder Klicktechnik oder Falzen hergestellt werden.

Vor der Verbindung der beiden Hohlkörperhälften 6b, 6c zum gesamten Ventilkörper (Gehäuse) werden die haltenden Funktionsteile der bewegbaren Ventilstange 13, die Führungshülse 10, deren Endteile 11, Dichtungen 12, ein Endabschnitt der Ventilstange 13, das Anschlagteil 14' (Sicherungsring), ein Kraftspeicher 15 (Druckfeder) montiert und in Position gebracht und in den beiden

Hohlkörperhälften 6b, 6c eingesetzt. Am unteren Ende der Ventilstange 13, die im Montagezustand im Inneren eines Verteilerrohres 2 oder 2' liegt, ist der Ventilteller 16 angeordnet. Mit dem unterhalb der äußeren Dichtung 17 liegenden Gewindeabschnitt der Körperhälfte 6b wird der neuartig gestaltete Ventileinsatz 6 in eine Anschlussöffnung 4 des Verteilerrohres 2 oder 2' eingeschraubt.

Das dem eingeschraubten Ventileinsatz 6 im Verteilerrohr 2 oder 2' gegenüber liegend angeordnete jeweilige Anschlussstück 7 ist ebenfalls gemäß dem Kerngedanken der Erfindung in Leichtbauweise; Ausführungsvarianten sind in den Figuren 7 und 9 bis 10b gezeigt. Das Anschlussstück 7 besteht aus im vorzugsweise Tiefziehumformverfahren hergestellten Teilen, einem ersten Teilstück 30 und einem zweiten Teilstück 31. Verschiedene Ausführungsvarianten 7, 7", 7'" dieses Anschlussstückes werden dadurch erzeugt, dass vorzugsweise das zweite Teilstück in einer dritten Art 31" ausgeführt ist oder in anderen gestalterischen Details, auf die im Weiteren noch eingegangen wird.

Das erste Teilstück 30 und das jeweils zweite Teilstück 31, bzw. 31" sind entlang einer Funktionsachse 8" angeordnet. Das erste Teilstück 30 hat eine innere Durchgangsöffnung, in die ein Teilabschnitt des zweiten Teilstückes 31, bzw. 31" eingefügt ist. Dieser eingesteckte Teilabschnitt des zweiten Teilstückes wird durch Schweißen, Kleben, Löten, Klicktechnik, Falzen, Bördeln oder Pressen mit dem ersten Teilstück funktionsfest verbunden. Das erste Teilstück 30 und das jeweils angefügte zweite Teilstück 31 oder 31" haben einen gemeinsamen Durchgang 33.

Am ersten Teilstück 30 ist im Außenmantel bei der herstellenden Umformung zugleich ein Außengewinde angeformt. Mittels diesem Außengewinde wird ein Anschlussstück 7, 7" bzw. 7‴ in die betreffende Abzweigöffnung 5 des Verteilerrohres 2 bzw. 2' des Verteilers 1 bzw. 1' eingeschraubt.

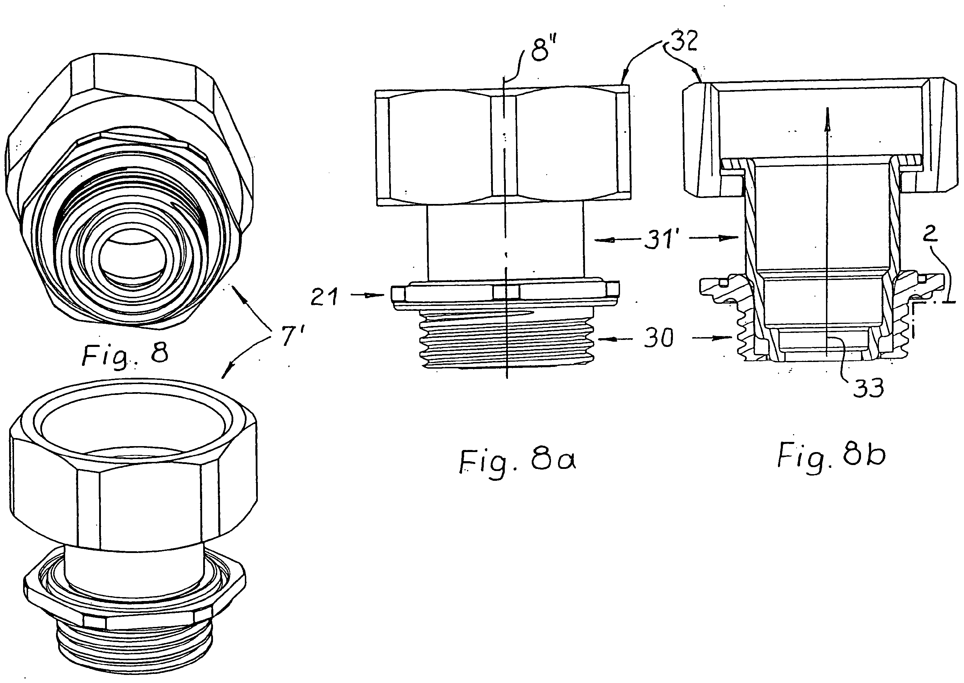

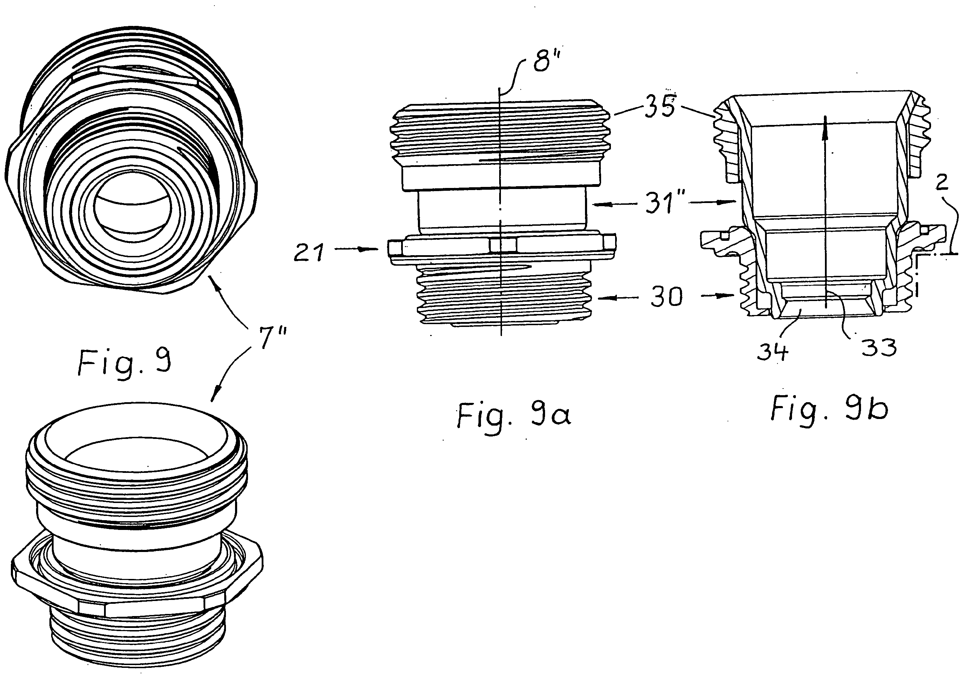

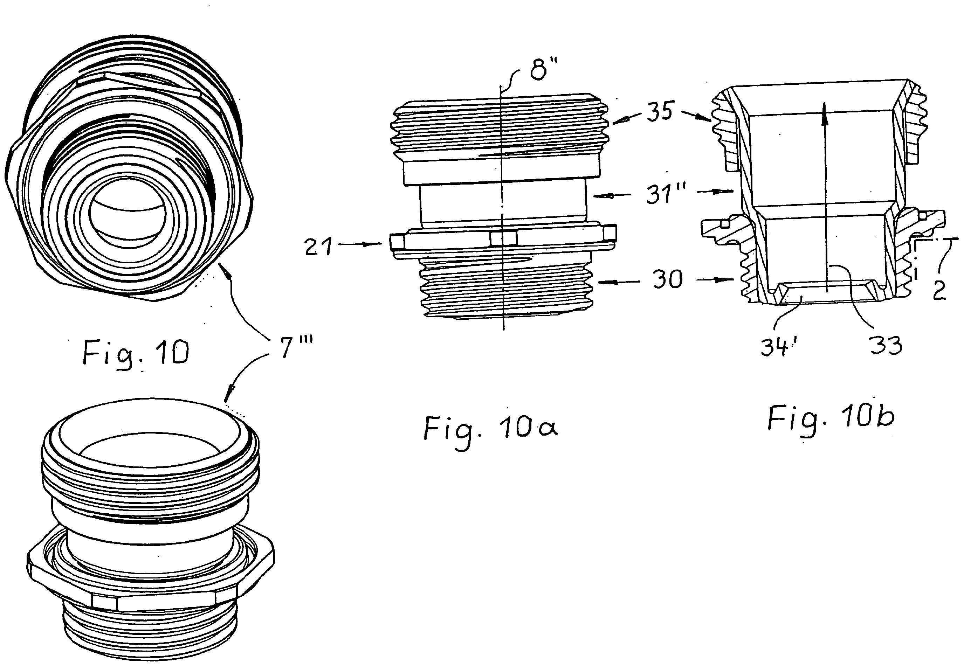

Das durch den anderen Endabschnitt des zweiten Teilstückes 31, bzw. 31" gebildete freie Ende des betreffenden Anschlussstückes 7, 7", 7‴ ist für den Anschluss an eine das betreffende Medium abführende Rohrleitung vorgesehen. Das betreffende Anschlussmittel ist in der Ausführung nach Figur 7 bis 7a und der Ausführung gemäß Figur 8 bis Figur 8b eine Überwurfmutter 32 mit Innengewinde. Bei den beiden Ausführungen gemäß den Figuren 9 bis 9b und 10 bis 10b ist anstelle der Überwurfmutter am Endabschnitt des zweiten Teilstückes 31" ein Gewindering 35 aufgesteckt und funktionsfest angeordnet. Bei der Ausführung erster Art des Anschlussstückes 7, siehe Figur 7b, ist ein Ventilsitz 34 vorgesehen, der in der Ausführung zweiter Art 7', siehe Figur 8b, nicht vorhanden ist. Dieses in den Figuren 8 gezeigte Anschlussstück fällt nicht unter die Ansprüche. In der Ausführung dritter Art 7" gemäß Figur 9b ist wieder ein Ventilsitz 34 vorgesehen. In der Ausführung vierter Art 7‴ gemäß der Figur 10b ist ein Ventilsitz 34' vorgesehen, welcher durch eine nach Innen gerichtete Umformung des Bereiches des einen Abschnittes des Teilstückes 31" dritter Art erzeugt ist.

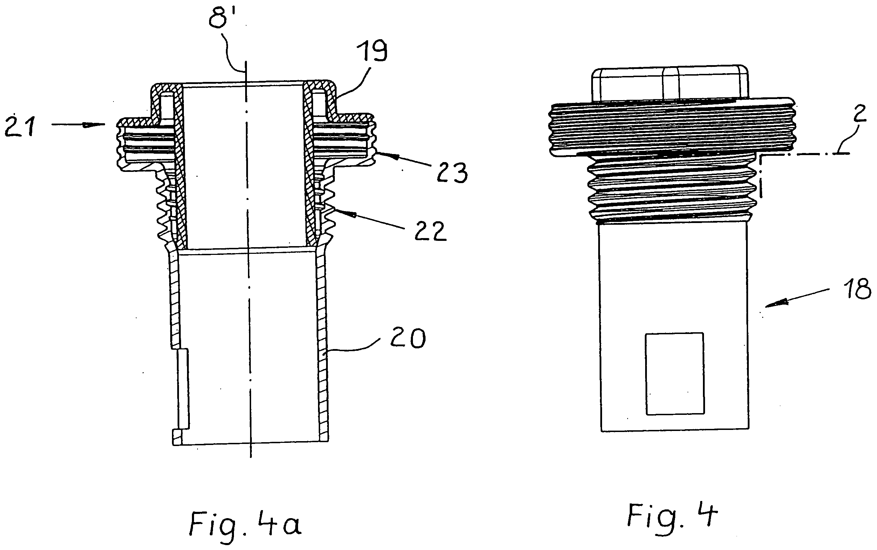

Ein drittes Funktionselement für einen Verteiler einer Verteilervorrichtung wird in den Figuren 4 bis 6a teilweise dargestellt. Dieses Funktionselement ist mit den Baugruppen gezeigt, die gemäß dem Kerngedanken der Erfindung hergestellt sind. Dies ist der Grundkörper 18, 18' bzw. 18" eines Ventileinsatzes mit Durchflussmessanzeige, der an einem Verteiler genannter Art eingesetzt ist. Ein derartiger Ventileinsatz ist dem Fachmann in seiner allgemeinen Ausbildung bekannt, zum Beispiel aus der DE 10 2005 006 478 B4 oder der DE 100 49 129 A1, sodass die weiteren Details eines solchen Ventileinsatzes mit integrierter Durchflussmess- bzw. Durchflussanzeige hier nicht erläutert werden müssen.

Gemäß dem Kerngedanken der vorliegenden Erfindung ist der Grundkörper 18, 18' bzw. 18" für ein erfindungsgemäßes drittes Funktionselement ebenfalls in Leichtbauweise ausgeführt. Das heißt, es besteht aus wenigstens zwei dünnwandigen Teilen aus Edelstahl, die nach deren jeweiliger Herstellung zu dem betreffenden Grundkörper 18, 18' bzw. 18" zusammengesetzt werden.

Bei der ersten, in den Figuren 4a und 4b gezeigten Ausführungsvariante wird das innere Teil 20 an einer Füge- und Trennebene 21 mit dem äußeren Teil 19 verbunden, und zwar hier durch Verschweißen oder Verkleben. Beiden Teilen 19 und 20 sind konzentrisch zu einer Funktionsachse 8' des Ventileinsatzes mit Durchflussmessanzeige.

Bei der Herstellung des inneren Teiles 20 wurde bereits ein äußerer erster Gewindeabschnitt 22 und ein äußerer zweiter Gewindeabschnitt 23 durch Umformung erzeugt. Dabei dient der äußere erste Gewindeabschnitt 22 zum Einschrauben dieses Teiles 18 in die betreffende Anschlussöffnung 4 eines Verteilers 1 bzw. 1'. Der äußere zweite Gewindeabschnitt 23 dient zur Verbindung von weiteren Funktionsteilen dieses dritten Funktionselementes an seinem Grundkörper 18.

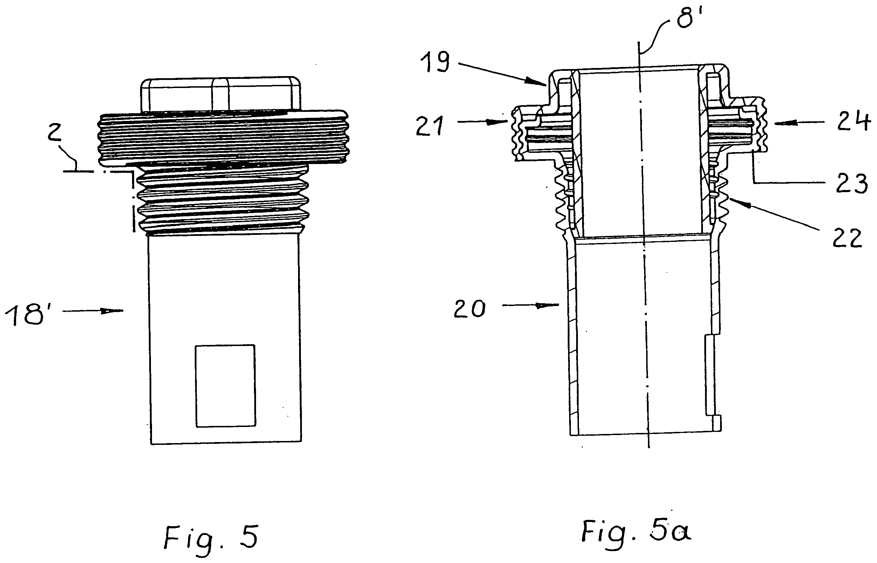

Bei der in den Figuren 5 und 5a gezeigten zweiten Ausführung des Grundkörpers 18' ist die Verbindung zwischen dem inneren Teil 20 und dem äußeren Teil 19 im Bereich der Trennebene 21 durch eine Verschraubung realisiert. Die für diese Verschraubung benötigten Gewindeabschnitte sind, wie bereits vorher schon ausgeführt, zugleich bei der Herstellung der einzelnen Teile 19 und 20 durch Umformung hergestellt worden. Auch hier dient der äußere erste Gewindeabschnitt 22 zum Einschrauben des Grundkörpers 18' in eine betreffende Anschlussöffnung 4 eines Verteilerrohres 2 bzw. 2' eines Verteilers 1 bzw. 1'. Der Außengewindeabschnitt 24 umfasst zugleich den äußeren zweiten Gewindeabschnitt 23 des inneren Teiles 20. Dieser Außengewindeabschnitt 24 wird hier ebenfalls für den Anschluss von weiteren Funktionsteilen des dritten Funktionselementes genutzt.

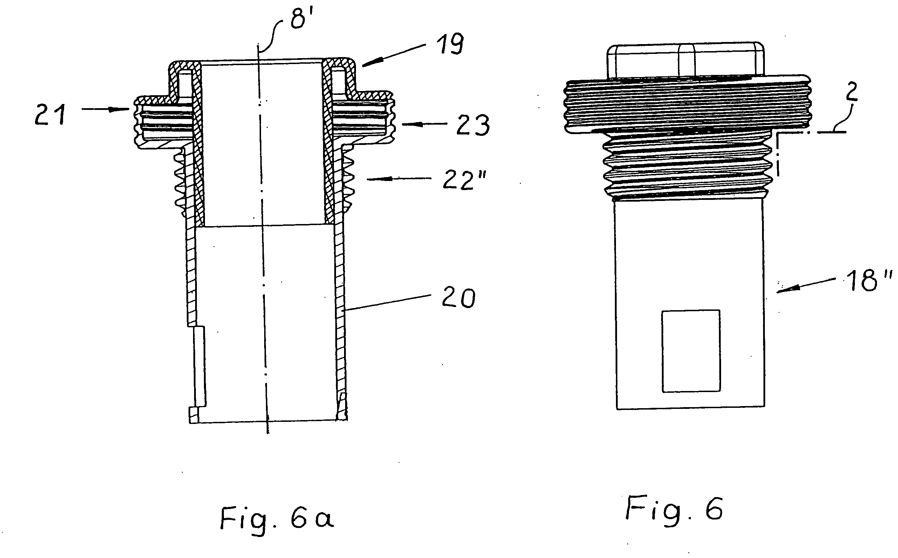

Eine weitere Ausführungsvariante der Gestaltung des Grundkörpers 18" eines dritten Funktionselementes ist in den Figuren 6 und 6a gezeigt. Bei diesem Ausführungsbeispiel ist der äußere erste Gewindeabschnitt ein aufgeschobener Gewindering, sodass ein aufgesetzter erster Gewindeabschnitt 22" hergestellt ist.

Ein weiterer bisher noch nicht genannter Vorteil der erfindungsgemäßen Ausbildung von Funktionselementen für einen Verteiler einer Verteilervorrichtung, der insbesondere bei den angesprochenen zweiten und dritten Funktionselementen, also den Anschlussstücken 7, 7" und 7‴ bzw. den Grundkörpern 18, 18' und 18" erreicht wird, besteht in der Erzielung eines Baukastensystems. Hierdurch ist für das Vorhalten verschiedener Ausführungsvarianten dieser Funktionselemente die Kombination von einzelnen Bauteilen möglich, sodass die Lagerhaltung beim Hersteller dieser Funktionselemente kostenmäßig wesentlich verringert werden kann. Zudem wird durch die Erfindung der Wiederholteilgrad erhöht, was kostengünstig für die Maschinenauslastung beim Hersteller dieser Bauteile ist; die Rüstzeit (Produktionsnebenzeiten) für die Fertigungsmaschinen können wesentlich gesenkt werden, sodass vom zur Verfügung stehenden Zeitvolumen ein größerer Anteil für Fertigungszeiten genutzt werden kann.

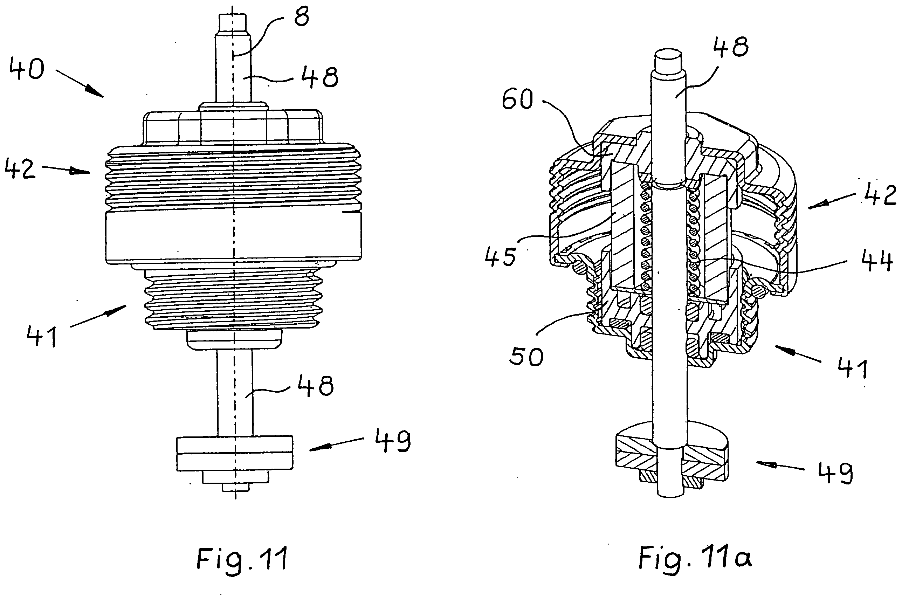

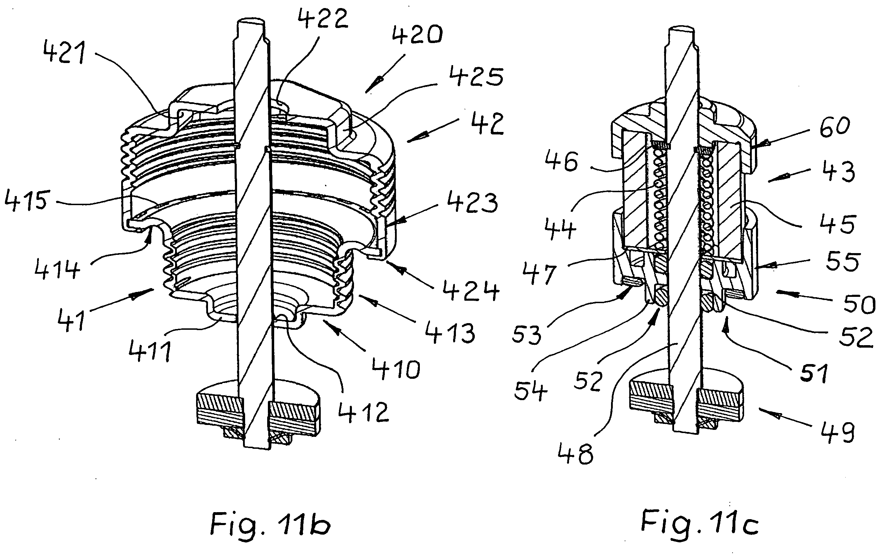

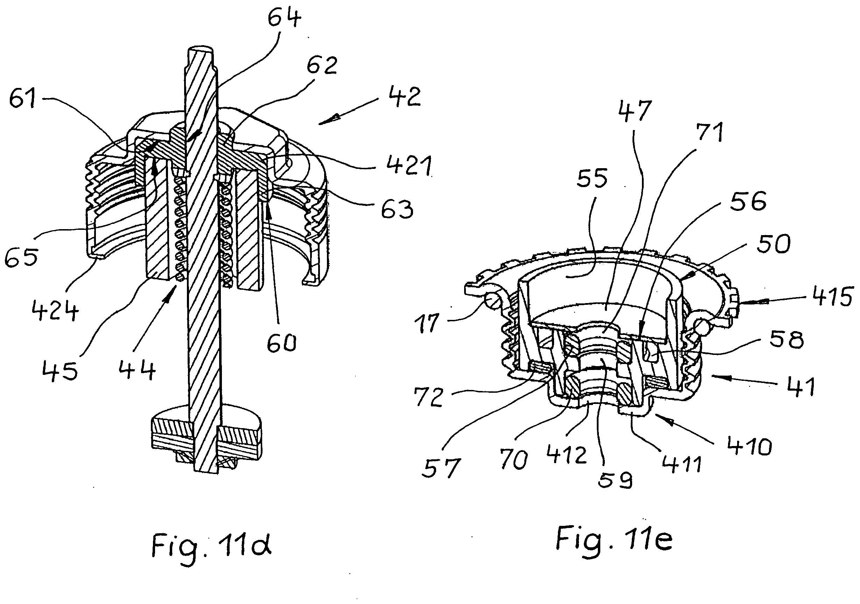

Eine weitere erfindungsgemäße Ausführung des neuen Funktionselementes in Form eines Ventileinsatzes für ein Hubventil wird folgend und anhand der Figuren 11 bis 11e beschrieben. Bei diesem zweiten Ausführungsbeispiel für einen Ventileinsatz wird zum einen der bereits weiter vorn beschriebene Kerngedanke der Erfindung, die qualitativ hochwertige und kostensparende Leichtbauweise, verwendet und zudem wird die Abdichtung des Ventileinsatzes gegenüber dem fließenden temperaturübertragenden Medium, welches den eingeschraubten, unteren Gehäuseteil des Ventileinsatzes nebst heraus ragender Ventilstange umströmt, verbessert.

In der Figur 11 ist ein solcher, der neue zweite Ventileinsatz 40, in einer Gesamtansicht gezeigt. Er besteht aus der unteren, ersten Hohlkörperhälfte 41 und der oberen, zweiten Hohlkörperhälfte 42. Mit einer im Inneren des zweiten Ventileinsatzes 40 angeordneten Führungsgruppe 43, die im Weiteren noch detailliert beschrieben wird, wird die Ventilstange 48 gehalten und geführt. Die Ventilstange 48 ist in der Funktionsachse 8 angeordnet und entlang dieser axial bewegbar, innerhalb einer einstellbaren Wegstrecke.

Der unten aus dem zweiten Ventileinsatz herausragende Abschnitt der Ventilstange 48 trägt das Verschlusselement, den Ventilteller 49. Der oben aus dem zweiten Ventileinsatz 40 herausragende Abschnitt der Ventilstange 48 wird in bekannter Weise mit einem Stell- oder Regelungselement verbunden, zum Beispiel einem Thermostat. Diese Einheit bzw. Einheiten sind im Stand der Technik und dem Fachmann bekannt, so dass hier nicht weiter darauf eingegangen wird. Mit der Strich-Punkt-Linie ist in dieser Darstellung das Verteilerrohr 2 angedeutet, in welchem der zweite Ventileinsatz 40 für seinen Gebrauch eingeschraubt wird.

Konstruktionsmäßige Details dieses zweiten Ventileinsatzes 40 sind in den Figuren 11a, 11b, 11c, 11d und 11e aufgezeigt. Die Figur 11a zeigt eine Schnittdarstellung durch den zweiten Ventileinsatz 40. In dem aus den beiden Gehäusehälften, der unteren, ersten Hohlkörperhälfte 41 und der oberen, zweiten Hohlkörperhälfte 42 gebildeten Ventilkörper ist die Führungsgruppe für das Halten und Führen der Ventilstange 48 angeordnet. Diese Führungsgruppe 43, siehe auch Figur 11c, besteht aus einem ersten, unteren Führungsteil 50 und einem oberen, zweiten Führungsteil 60, die mittels einer Distanzhülse 45 mit Abstand zueinander angeordnet sind. Innerhalb der Distanzhülse 45 ist ein Kraftspeicher 44, hier eine Druckfeder, angeordnet, die am ersten, unteren Führungsteil 50 und am zweiten, oberen Führungsteil 60 abgestützt ist, siehe hierzu Figur 11a und 11e.

Details der beiden Hohlkörperhälften 41 und 42 sowie deren Verbindung miteinander sind in der Figur 11b gezeigt. Zur besseren übersichtlichen Ansicht ist in dieser Darstellung die Führungsgruppe 43 nicht gezeigt. Die verwendete Bezeichnung "oben" und "unten" beziehen sich auf die Darstellung.

Die untere, erste Hohlkörperhälfte 41 ist in etwa topfförmig ausgebildet. Von einem Boden 410 aus ragt eine zylindrische Wand 413 aufwärts. Im Boden 410 ist zentrisch eine Senke 411 angeordnet. In dieser

Senke 411 ist wiederum zentrisch ein Durchbruch 412 vorgesehen, zur Durchführung der Ventilstange 48. Der freie Endabschnitt 414 der zylindrischen Wand 413 ist in dieser Ausführung der Erfindung ein nach Außen gerichteter Flansch. Der Rand 415 des Endabschnittes 414 ist zudem gezackt ausgeführt, siehe hierzu auch in Figur 11e.

Nach einer nicht gezeigten weiteren Ausführung kann dieser Endabschnitt 414 auch als gewellter Rand ausgeführt sein.

Bei dem hier gezeigten Ausführungsbeispiel ist die obere, zweite Hohlkörperhälfte 42 ebenfalls als Hohlzylinder topfförmig gestaltet. Der Endabschnitt 424 der zylindrischen Wand 423 dient zur Verbindung der beiden Hohlkörperhälften 41 und 42. Nach der Positionierung aller Funktionsteile des Ventileinsatzes 40, also der Führungsgruppe 43 mitsamt der Ventilstange 48 in den beiden Gehäusehälften, der ersten Hohlkörperhälfte 41 und der zweiten Hohlkörperhälfte 42, wird der Endabschnitt 424 einwärts, also in Richtung Funktionsachse 8 zu dem Endabschnitt 414 hin, umgebogen und mit diesem Endabschnitt 414 der ersten Hohlkörperhälfte 41 zusammengefügt.

Die Bezackung bzw. Wellung im Rand 415 bewirkt, dass auch der umgebogene Abschnitt des Endabschnittes 424 bei entsprechender Pressung die Form der Zackung bzw. Wellung annimmt. Hierdurch wird erreicht, dass auf die Füge- und Trennebene 9 des Gehäuses des zweiten Ventileinsatzes 40 ein größeres Kraftmoment ausgeübt werden kann. Ein solches Kraftmoment tritt beim Einschrauben des zweiten Ventileinsatzes 40 in das Verteilerrohr 2 bzw. 2' bzw. beim Lösen des zweiten Ventileinsatzes 40 von dem Verteilerrohr 2 bzw. 2' auf. Zum Anlegen des Drehmomentes für das Einschrauben bzw. Lösen des zweiten Ventileinsatzes 40 sind an seiner oberen, zweiten Hohlkörperhälfte 42 Schlüsselflächen 425 vorgesehen.

Zur Positionierung von Teilen der Führungsgruppe 43 in der oberen, zweiten Hohlkörperhälfte 42 besitzt deren Dach 420 eine zentrisch angeordnete zylinderförmige Kuppel 421. In dieser zylinderförmigen Kuppel 421 ist wiederum zentrisch ein Durchbruch 422 vorgesehen. In diesem Durchbruch 422 wird ein Abschnitt des zweiten, oberen Führungsteiles 60 positioniert.

Die Führungsgruppe 43 mitsamt Führungsteil 60 ist im Weiteren in der Figur 11c gezeigt. Wie bereits erwähnt, besteht die Führungsgruppe 43 für die Ventilstange 48 aus dem ersten, unteren Führungsteil 50 und dem zweiten, oberen Führungsteil 60, die zueinander beabstandet angeordnet sind. Für diesen Abstand ist eine Distanzhülse 45 vorgesehen, die in jeweiligen Ausnehmungen der Führungsteile 50 und 60 positioniert ist.

Innerhalb der Distanzhülse 45 ist, wie bereits erwähnt, der Kraftspeicher 44 angeordnet. Dieser Kraftspeicher 44, eine Druckfeder, stützt sich einerseits an einer Lochscheibe 47 ab, die unterhalb der Distanzhülse 45 in dem ersten, unteren Führungsteil 50 angeordnet ist. Zur oberen Abstützung des Kraftspeichers 44 ist ein Sicherungsring 46 vorgesehen, der in eine in der Ventilstange 48 vorgesehene Rille eingreift. Die Endlage der Ventilstange 48 für die Arbeitsstellung "vollständig offen" wird durch Anlage des Sicherungsringes 46 an dem inneren Boden 65 des zweiten, oberen Führungsteiles 60 bestimmt. Das zweite, obere Führungsteil 60 hat im Wesentlichen die Form eines zylindrischen Hohlkörpers, siehe hierzu auch die Figur 11d. Die Zylinderwand 63 des Führungsteils 60 mitsamt dessen innerem Boden 65 ist zur Aufnahme der Distanzhülse 45 ausgebildet sowie als Anschlag für den Kraftspeicher. Der äußere Boden 61 ist radial auswärts zurückgesetzt, sodass eine Nabe 62 gebildet ist. Mit dieser Nabe 62 wird das zweite, obere Führungsteil 60 in der oberen, zweiten Körperhälfte 42 positioniert, und zwar im Durchbruch 422 der zylinderförmigen Kuppel 421. Im Boden des zweiten, oberen Führungsteiles 60 ist zentrisch eine Führungsbohrung 64 vorgesehen, zur Führung der Ventilstange 48.

Das erste, untere Führungsteil 50 hat in etwa die Form eines doppelseitigen Hohlzylinders, siehe hierzu in Figur 11e und Figur 11c. Die bezüglich der Führungsgruppe 43 äußere Bodenfläche 51 des ersten, unteren Führungsteiles 50, besitzt eine zentrische Eindrehung 52 und eine konzentrische Ringnut 53. Ihre Zylinderwand 55 ist auf dieser Seite axial zurückgesetzt, sodass zwischen der zentrischen Eindrehung 52 und der konzentrischen Ringnut 53 ein hervorstehender zylindrischer Hals 54 gebildet ist. Mit diesem zylindrischen Hals 54 wird die Führungsgruppe 43, d. h. insbesondere das erste, untere Führungsteil 50, in der Senke 411 des Bodens 410 der unteren, ersten Körperhälfte 41 positioniert. In der zentrischen Eindrehung 52 ist ein Dichtungsring 70 angeordnet und in der konzentrischen Ringnut 53 ein Dichtungsring 72. Der Dichtungsring 70 liegt also in der Senke 411 und der Dichtungsring 72 an der Innenfläche des Bodens 410 an, sozusagen radialer Nachbarschaft.

Von der anderen Seite des ersten, unteren Führungsteiles 50 her ist eine größere zylindrische Ausnehmung vorgesehen.

Deren innere Bodenfläche 56 besitzt ebenfalls eine zentrische Eindrehung 57 und eine dazu konzentrische liegende Ringnut 58. In der zentrischen Eindrehung 57 ist ein Dichtungsring 71 angeordnet.

Die Bodenfläche dieses ersten, unteren Führungsteiles 50 wird zentrisch von einer Führungsbohrung 59 durchsetzt. Diese Führungsbohrung 59 ist die zweite Lager- und Führungsstelle für die Ventilstange 48.

Die konzentrische Ringnut 58 ist zwecks Gewichtsreduzierung vorgesehen. Die in den Innenzylinder des ersten, unteren Führungsteiles 50 eingelegte Lochscheibe 47 dient einerseits als zweites Gegenlager für den Kraftspeicher 44 und zugleich wird mit dieser und im Zusammenhang mit dem Kraftspeicher eine Flächenpressung für den Dichtungsring 71 erzeugt.

Die weiterhin in Figur 11e gezeigte ringförmige äußere Dichtung 17 dient zur Abdichtung beim Einschrauben des zweiten Ventileinsatzes 40 in ein Verteilerrohr 2 bzw. 2'.

Wie aus der Figur 11a ersichtlich ist, wird mit dem Kraftspeicher in Verbindung mit dem oberen Gegenlager, dem Sicherungsring 46, bewirkt, dass die mit einem hier nicht dargestellten Regler, zum Beispiel einem Thermostatansatz, eingestellte Position des Verschlussteiles, des Ventiltellers 49, auch bei Druckschwankungen im Verteiler stets beibehalten wird. Andererseits ist der Kraftspeicher 44 auch so ausgelegt, dass die im ersten, unteren Führungsteil 50 angeordneten Dichtungen 70, 71 und 72 stets eine ausreichende Flächenpressung erfahren, sodass der Ventileinsatz gegenüber dem strömenden Medium besonders gut abgedichtet ist.

Nach dem Stand der Technik ist bei einem Ventileinsatz vorgesehen, dass zur Verhinderung des Austrittes des strömenden Mediums das bewegte Teil des Ventileinsatzes, die Ventilstange, an zwei Stellen abgedichtet ist. Und zwar, vom strömenden Medium aus gesehen, am Eintritt der Ventilstange in das Gehäuse des Ventileinsatzes und eine zweite Sicherheitsdichtung am Austritt der Ventilstange aus dem Gehäuse. Zudem waren die Dichtungsringe dort zugleich als Lager- und Führungsstellen für die Ventilstange vorgesehen, sodass bei längerer Benutzung des Ventileinsatzes und auch bei relativ aggressiven strömenden Medien ein Eintritt des strömenden Mediums, sozusagen von unten her, in den Ventileinsatz nicht ausgeschlossen war. In einem solchen Fall sollte dann die obere Abdichtung ein Austreten des strömenden Mediums aus dem Gesamtsystem verhindern.

Die erfindungsgemäße Verlagerung der zweiten axialen Dichtungsstelle zu dem Bereich des Ventileinsatzes hin, an dem ein Eintritt des strömenden Mediums erfolgen könnte, also zu dem sogenannten Eintrittsbereich der Ventilstange in das Gehäuse des Ventileinsatzes hin, bringt eine erhöhte Sicherheit. Zudem wird durch eine radial angeordnete zweite Dichtung und durch die Kraftbeaufschlagung der vorgesehenen drei Dichtungsringe 70, 71 und 72 stets die ausreichende Flächenpressung gewährleistet, mit der ein Eintreten von strömendem Medium in den Innenraum des zweiten Ventileinsatzes 40 zuverlässig verhindert werden kann. Zudem bewirkt diese erfindungsgemäße Ausführung eines Ventileinsatzes, des zweiten Ventileinsatzes 40, dass die Ventilstange nicht zugleich durch die Dichtungsringe geführt wird, sondern dass hier separate Führungsstellen, die Führungsbohrungen 59 und 64, vorgesehen sind.

Vorteile dieser erfindungsgemäßen Ausführung sind zudem, dass die Herstellungstoleranz für die einzelnen Bauteile des Ventileinsatzes wenigstens um eine Toleranzstufe gröber gehalten werden kann, was Fertigungskosten spart, und, dass die Lebensdauer, also die verfügbare Einsatzzeit eines Ventileinsatzes erhöht ist und, wie bereits weiter vorn schon erwähnt, der Ventileinsatz als Baugruppensatz lagermäßig vorgehalten werden kann, sodass die Reaktionszeit zwischen Bestellung und Auslieferung eines Ventileinsatzes relativ gering ist.

Die Erfindung ist nicht auf die dargestellte und beschriebene Ausführungsbeispiele beschränkt, sondern umfasst auch Varianten, die innerhalb des Schutzbereiches liegen, der durch die folgende Ansprüchen definiert ist. Z

### Bezugsziffernverzeichnis:

- 1, 1': Verteiler (einer Verteilervorrichtung)
- 2, 2': Verteilerrohr
- 3: Zuflussöffnung (an Positon 1, 1')
- 4: Anschlussöffnungen
- 5: Abzweigöffnungen
- 6: Ventileinsatz (erstes Funktionselement gemäß der Erfindung)
- 6a: bewegbare Funktionsteile (an Pos. 6)
- 6b: erste Gehäusehälfte (Hohlkörperhälfte)
- 6c: zweite Gehäusehälfte (Hohlkörperhälfte)
- 6': erstes Funktionselement nach dem Stand der Technik (Ventileinsatz aus Messing)
- 6'a: Ventilkörper (von Pos. 6')
- 6'b: bewegbare Funktionsteile (von Pos. 6')
- 6'c: Deckel (von Pos. 6'a)
- 7, 7", 7'": Anschlussstücke (zweites Funktionselement gemäß der Erfindung)
- 7': Anschlussstuck (nicht als zweites Funktionselement gemäß der Erfindung)
- 8, 8', 8": Funktionsachsen (Körperlängsachsen)
- 9: Füge- und Trennebene (bei Pos. 6)
- 10: Führungshülse
- 11: Endteile

- 12: Dichtungen
- 13: Ventilstange
- 14,: 14' Anschlagteile (Sicherungsringe)
- 15: Kraftspeicher (Druckfeder)
- 16: Ventilteller
- 17: äußere Dichtung
- 18, 18', 18": Grundkörper eines dritten Funktionselementes
- 19: äußeres Teil
- 20: inneres Teil
- 21: Füge- und Trennebene (bei Pos. 7, 7', 7", 7‴, 18, 18', 18")
- 22: äußerer erster Gewindeabschnitt
- 22": aufgesetzter äußerer erster Gewindeabschnitt
- 23: äußerer zweiter Gewindeabschnitt
- 24: Außengewindeabschnitt an Pos. 19

- 30: erstes Teilstück
- 31: zweites Teilstück
- 31': zweites Teilstück zweiter Art
- 31": zweites Teilstück dritter Art
- 32: Überwurfmutter
- 33: gemeinsamer Durchgang
- 34: Ventilsitz
- 34': Ventilsitz zweiter Art
- 35: aufgesetzter Gewindering

- 40: zweiter Ventileinsatz
- 41: erste Hohlkörperhälfte (Gehäusehälfte)
410 Boden
411 Senke
412 Durchbruch (zentrisch)
413 zylindrische Wand
414 Endabschnitt
415 Rand (gezackt, gewellt)
- 42: zweite Hohlkörperhälfte (Gehäusehälfte)
420 Dach
421 zylinderförmige Kuppel
422 Durchbruch (zentrisch)
423 zylindrische Wand
424 Endabschnitt (von Pos. 423)
425 Schlüsselflächen (an Pos. 421)
- 43: Führungsgruppe
- 44: Kraftspeicher (Druckfeder)
- 45: Distanzhülse
- 46: Sicherungsring
- 47: Lochscheibe
- 48: Ventilstange
- 49: Ventilteller (Verschlusselement)
- 50: erstes, unteres Führungsteil
- 51: äußere Bodenfläche
- 52: zentrische Eindrehung
- 53: konzentrische Ringnut
- 54: zylindrischer Hals
- 55: Zylinderwand
- 56: innere Bodenfläche
- 57: zentrische Eindrehung
- 58: konzentrische Ringnut
- 59: Führungsbohrung
- 60: zweites, oberes Führungsteil
- 61: äußerer Boden
- 62: Nabe
- 63: Zylinderwand
- 64: Führungsbohrung
- 65: innerer Boden

- 70: Dichtungsring
- 71: Dichtungsring
- 72: Dichtungsring

## Patentansprüche

1. Verteiler (1, 1') für Gebäude- oder Raumtemperierungssysteme, wobei der Verteiler (1, 1') ein Verteilerrohr (2, 2') besitzt, das mindestens eine Zuflussöffnung (3) über die ein Fluid in das Verteilerrohr (2, 2') fließen kann, mindestens eine Anschlussöffnung (4) und mindestens eine Abzweigöffnung (5) aufweist, wobei in der Anschlussöffnung (4) ein erstes Funktionselement (6) eingeschraubt ist und in der Abzweigöffnung (5) ein zweites Funktionselement (7) eingeschraubt ist, wobei
- das erste Funktionselement ein Ventileinsatz (6; 40) ist und wenigstens einen Körper als Gehäuse aufweist, in dem wenigstens ein Funktionsteil (13) bewegbar gehalten ist, und,
- das zweite Funktionselement ein Anschlussstück (7, 7", 7‴) ist und wenigstens einen Körper als Gehäuse aufweist, an dem wenigstens eine Funktionsfläche vorgesehen ist,
**dadurch gekennzeichnet, dass** das Gehäuse der Funktionselemente (6, 40; 7, 7", 7‴) jeweils aus wenigstens zwei dünnwandigen Teilen (6b, 6c bzw. 41, 42 bzw. 30, 31 bzw. 30, 31") aus kaltumformbarem Material zusammengesetzt ist, wobei die Füge- und Trennebene (9, 21), in deren Bereich die wenigstens zwei kaltumgeformten Teile des Gehäuses miteinander verbunden werden, im Wesentlichen quer zu einer Funktionsachse (8) des bewegbaren Funktionsteiles (13) des ersten Funktionselementes bzw. der Funktionsfläche des zweiten Funktionselementes liegt, wobei die Funktionsfläche des zweiten Funktionselementes (7, 7", 7‴) ein Ventilsitz ist und das erste Funktionselement (6; 40) und das zweite Funktionselement (7, 7", 7‴) zusammen ein Hubventil bilden.

2. Verteiler (1, 1') nach Anspruch 1,
***dadurch gekennzeichnet, dass***
das Gehäuse des ersten und/oder des zweiten Funktionselementes aus Edelstahl ist.

3. Verteiler (1, 1') nach Anspruch 1,
***dadurch gekennzeichnet, dass***
das erste Funktionselement ein Ventileinsatz mit integrierter Durchflussmessanzeige ist, dessen Grundkörper (18, 18', 18") aus mehreren dünnwandigen Teilen (19, 20) aus Edelstahl zusammengesetzt ist.

4. Verteiler (1, 1') nach Anspruch 1 oder 2,
***dadurch gekennzeichnet, dass***
das erste Funktionselement ein Ventileinsatz (6; 40) ist, welcher aus einer unteren, ersten Hohlkörperhälfte (6b; 41) und einer oberen, zweiten Hohlkörperhälfte (6c; 42) besteht, mit einer im Inneren dieses Ventileinsatzes (6; 40) angeordneten Führungsgruppe (10, 11; 43), in welcher eine Ventilstange (13; 48) des Ventileinsatzes (6; 40) gehalten und geführt ist, wobei die Ventilstange (13; 48) in der Funktionsachse (8) angeordnet und entlang dieser axial bewegbar ist, innerhalb einer einstellbaren Wegstrecke.

5. Verteiler (1, 1') nach einem der Ansprüche 1 bis 4,
***dadurch gekennzeichnet, dass***
die dünnwandigen Teilen (6b, 6c bzw. 41, 42 bzw. 30, 31 bzw. 30, 31' bzw. 30, 31") des Gehäuses der Funktionselemente im Wesentlichen tiefgezogen sind.

## Claims

1. Distributor (1, 1') for building or room temperature-control systems, wherein the distributor (1, 1') comprises a distributor pipe (2, 2') which has at least one inflow opening (3) by way of which a fluid can flow into the distributor pipe (2, 2'), at least one connection opening (4) and at least one branching-off opening (5), wherein a first functional element (6) is screwed into the connection opening (4) and a second functional element (7) is screwed into the branching-off opening (5),
wherein
- the first functional element is a valve insert (6; 40) and comprises at least one body as a housing in which at least one functional part (13) is movably retained, and
- the second functional element is a connecting member (7, 7", 7‴) and comprises at least one body as a housing at which at least one functional surface is provided,
**characterised in that**
the housing of the functional elements (6, 40; 7, 7". 7‴) is assembled in each instance from at least two thin-walled parts (6b, 6c or 41, 42 or 30, 31 or 30, 31") of cold-deformable material, wherein the joining and separating plane (9, 21), in the region of which the at least two cold-formed parts of the housing are connected together, lies substantially transversely to a functional axis (8) of the movable functional part (13) of the first functional element or the functional surface of the second functional element,
wherein the functional surface of the second functional element (7, 7", 7‴) is a valve seat and the first functional element (6; 40) and the second functional element (7, 7", 7‴) together form a stroke valve.

2. Distributor (1, 1') according to claim 1,
**characterised in that**
the housing of the first and/or second functional element is of stainless steel.

3. Distributor (1, 1') according to claim 1,
**characterised in that**
the first functional element is a valve seat with integrated throughflow measuring indicator, the base body (18, 18', 18") of which is assembled from a plurality of thin-walled parts (19, 20) of stainless steel.

4. Distributor (1, 1') according to claim 1 or 2,
**characterised in that**
the first functional element is a valve insert (6; 40), which consists of a lower, first hollow body half (6b; 41) and an upper, second hollow body half (6c; 42), with a guide group (10, 11' 43) which is arranged in the interior of this valve insert (6; 40) and in which a valve rod (13; 48) of the valve insert (6; 40) is held and guided, wherein the valve rod (13; 48) is arranged in the functional axis (8) and axially movable therealong within a settable travel path.

5. Distributor (1, 1') according to any one of claims 1 to 4,
**characterised in that**
the thin-walled parts (6b, 6c or 41, 42 or 30, 31 or 30, 31' or 30, 31") of the housing of the functional elements are substantially deep-drawn.

## Revendications

1. Répartiteur (1, 1') destiné à des systèmes de régulation thermique de bâtiments ou de locaux, ledit répartiteur (1, 1') étant muni d'une tubulure de répartition (2, 2') comprenant au moins un orifice d'afflux (3) par l'intermédiaire duquel un fluide peut parvenir dans ladite tubulure de répartition (2, 2'), au moins un orifice de raccordement (4) et au moins un orifice de bifurcation (5), un premier élément fonctionnel (6) et un second élément fonctionnel (7) étant respectivement insérés, par vissage, dans ledit orifice de raccordement (4) et dans ledit orifice de bifurcation (5),
sachant
- que le premier élément fonctionnel est une pièce incorporée de distribution (6 ; 40) et est pourvu d'au moins un corps matérialisant un carter, dans lequel au moins une partie fonctionnelle (13) est retenue avec mobilité, et
- que le second élément fonctionnel est une pièce de raccordement (7, 7", 7‴) et est doté d'au moins un corps matérialisant un carter, sur lequel est prévue au moins une surface fonctionnelle,
**caractérisé par le fait que**
le carter des éléments fonctionnels (6, 40 ; 7, 7", 7‴) est composé, à chaque fois, d'au moins deux parties (6b, 6c, respectivement 41, 42, respectivement 30, 31, respectivement 30, 31") à parois minces, en un matériau déformable à froid,
sachant que le plan (9, 21) de jonction et de séparation, dans la région duquel sont reliées mutuellement les deux parties à présence minimale déformées à froid, constitutives du carter, est disposé pour l'essentiel transversalement par rapport à un axe fonctionnel respectif (8) de la partie fonctionnelle mobile (13) du premier élément fonctionnel, ou de la surface fonctionnelle du second élément fonctionnel,
sachant que ladite surface fonctionnelle du second élément fonctionnel (7, 7", 7"') est un siège d'obturation, et que le premier élément fonctionnel (6 ; 40) et ledit second élément fonctionnel (7, 7", 7‴) forment associativement une soupape à levée rectiligne.

2. Répartiteur (1, 1') selon la revendication 1,
**caractérisé par le fait que**
le carter du (des) premier et/ou second élément(s) fonctionnel(s) consiste en de l'acier spécial.

3. Répartiteur (1, 1') selon la revendication 1,
**caractérisé par le fait que**
le premier élément fonctionnel est une pièce incorporée de distribution à affichage intégré de mesure du débit, dont le corps de base (18, 18', 18") est composé de plusieurs parties (19, 20) en acier spécial, à parois minces.

4. Répartiteur (1, 1') selon la revendication 1 ou 2,
**caractérisé par le fait que**
le premier élément fonctionnel est une pièce incorporée de distribution (6 ; 40), constituée d'une première moitié inférieure (6b ; 41) d'un corps creux et d'une seconde moitié supérieure (6c ; 42) dudit corps creux, avec un groupe de guidage (10, 11 ; 43) qui est logé dans l'espace interne de cette pièce incorporée de distribution (6 ; 40) et dans lequel est retenue, et guidée, une tige obturatrice (13 ; 48) de ladite pièce incorporée de distribution (6 ; 40), laquelle tige obturatrice (13 ; 48) est disposée dans l'axe fonctionnel (8) le long duquel elle est mobile, axialement, dans les limites d'une course réglable.

5. Répartiteur (1, 1') selon l'une des revendications 1 à 4,
**caractérisé par le fait que**
les parties (6b, 6c, respectivement 41, 42, respectivement 30, 31, respectivement 30, 31', respectivement 30, 31") à parois minces, constitutives du carter des éléments fonctionnels, sont soumises pour l'essentiel à emboutissage profond.
